# EUROPÄISCHE PATENTSCHRIFT

(11) **EP 3 083 123 B1**
(45) Veröffentlichungstag und Bekanntmachung des Hinweises auf die Patenterteilung: **31.07.2019**
(21) Anmeldenummer: 14812731.9
(22) Anmeldetag: 15.12.2014
(51) Int. Cl.: B23K 10/00, B23K 26/38, B23K 37/02, B23K 37/04, B62D 7/20, B23K 26/08

(54) **MASCHINE ZUM TRENNENDEN BEARBEITEN VON PLATTENFÖRMIGEN WERKSTÜCKEN UND DESSEN VERWENDUNG**
MACHINE FOR THE SEPARATIVE MACHINING OF PLATE-SHAPED WORKPIECES AND THE USAGE THEREOF
MACHINE POUR DIVISER DES PIÈCES EN FORME DE PLAQUES ET SON UTILISATION

(30) Priorität: 20.12.2013 DE 102013226818
(43) Veröffentlichungstag der Anmeldung: 26.10.2016
(73) Patentinhaber: Trumpf Werkzeugmaschinen GmbH + Co. KG, 71254 Ditzingen (DE)
(72) Erfinder: SCHMAUDER, Frank, 72555 Metzingen (DE); OCKENFUSS, Simon, 71034 Böblingen (DE); EPPERLEIN, Peter, 71229 Leonberg (DE); DEISS, Magnus, 70372 Stuttgart (DE); WOLF, Dennis, 71297 Mönsheim (DE); KRAMPFERT, Johannes, 77815 Bühl (DE)
(74) Vertreter: Kohler Schmid Möbus Patentanwälte
(86) Internationale Anmeldenummer: PCT/EP2014/077741
(87) Internationale Veröffentlichungsnummer: WO 2015/091347

(56) Entgegenhaltungen:
- EP-A1- 0 927 597
- JP-A- S61 206 586
- JP-A- 2004 050 184

## Beschreibung

Die vorliegende Erfindung betrifft eine Maschine, insbesondere eine Laserbearbeitungsmaschine, zum trennenden Bearbeiten eines plattenförmigen Werkstücks mittels eines Bearbeitungsstrahls, insbesondere mittels eines Laserstrahls, mit: einer ersten Bewegungseinrichtung zur Bewegung des Werkstücks in einer ersten Richtung, einer zweiten Bewegungseinrichtung zur Bewegung eines den Bearbeitungsstrahl auf das Werkstück ausrichtenden Bearbeitungskopfs in einer zweiten, zur ersten senkrechten Richtung, sowie zwei Werkstückauflageflächen zur Auflage des Werkstücks, zwischen denen ein sich entlang der zweiten Richtung erstreckender Spalt gebildet ist. Der Oberbegriff des Anspruchs 1 basiert z.B. auf JP 2004 050184 A. Die Erfindung betrifft auch ein Verfahren zum trennenden Bearbeiten eines Werkstücks mittels einer solchen Maschine.

Eine solche Maschine zum trennenden Bearbeiten von plattenförmigen Werkstücken mittels eines Laserstrahls in Form einer kombinierten Laser- und Stanzmaschine ist aus der JP 5050346A bekannt geworden. An einer derartigen Maschine mit hybrider Bewegungsführung, bei der das Werkstück in einer ersten Richtung (X-Richtung) und der Bearbeitungskopf in einer zweiten Richtung (Y-Richtung) bewegt werden, ist zur Vermeidung von Beschädigungen durch den Bearbeitungsstrahl die Werkstückauflage im Verfahrbereich des Bearbeitungskopfs unterbrochen. In der Werkstückauflage erstreckt sich somit zwischen zwei Werkstückauflageflächen bzw. Werkstückauflagen ein Spalt in Y-Richtung. Durch diesen Spalt werden der durch das Werkstück hindurch getretene Bearbeitungsstrahl sowie anfallende Schlacke und Schneidbutzen abgeführt. Bei dem Bearbeitungsstrahl kann es sich um einen Laserstrahl handeln, aber auch die Verwendung einer anderen Art von Hochenergiestrahl, beispielsweise in Form eines Plasmalichtbogens, oder eines Wasserstrahls ist möglich.

Insbesondere für den Fall, dass eine solche (Laser-)Bearbeitungsmaschine eine Zusatzachse zur Bewegung des Bearbeitungskopfs in X-Richtung aufweist, ist es vorteilhaft, wenn der Spalt in der Werkstückauflage eine Mindestbreite aufweist, die zumindest dem Verfahrbereich des Bearbeitungskopfs in X-Richtung entspricht. Mittels der Zusatzachse kann der Bearbeitungskopf innerhalb des Spaltes mit hoher Dynamik verfahren werden. Ein breiter Spalt erlaubt außerdem ein freies Fallenlassen von kleinen bis mittelgroßen Schneidbutzen, Restgitterteilen oder kleineren Werkstückteilen, die beispielsweise mit Hilfe von Teilerutschen voneinander sowie von der Schlacke getrennt werden können. Auf diese Weise können Kleinteile deutlich schneller aus dem Schneidbereich entfernt werden als durch die Schwenkbewegung einer zu diesem Zweck vorgesehenen Ausschleusklappe.

Eine große Spaltbreite kann sich beim Freischneiden kleinerer Werkstückteile jedoch auch nachteilig auswirken, da kleine Werkstückteile im Spaltbereich nicht ausreichend unterstützt werden und aufgrund des hohen Gasdrucks des aus der Bearbeitungsdüse am Bearbeitungskopf austretenden und auf die freigeschnittenen Werkstückteile auftreffenden Schneidgases im Spalt verkippen und ggf. am Restwerkstück verhaken können.

Aus der JP2000246564 A2 ist eine Laser- und Stanzmaschine bekannt geworden, bei welcher das Werkstück in X-Richtung bewegt wird und ein Stanzstempel und eine Stanzmatrize gemeinsam in Y-Richtung bewegt werden. Zu diesem Zweck sind der Stanzstempel und die Stanzmatrize mechanisch über Hebelarme und Universalgelenke miteinander sowie mit einem gemeinsamen Antrieb gekoppelt.

In der JP2030332 A1 ist eine Maschine zum thermischen Schneiden und Stanzen von Werkstücken beschrieben, bei welcher ein Laserschneidkopf mittels zweier angetriebener Schlitten in X-Richtung und in Y-Richtung verfahren wird. Die Maschine weist einen in Y-Richtung synchron zum Laserschneidkopf verfahrbaren Werkstückaufnahmebehälter auf.

### Aufgabe der Erfindung

Der vorliegenden Erfindung stellt sich die Aufgabe, eine Maschine zur trennenden Bearbeitung plattenförmiger Werkstücke, insbesondere eine Laserbearbeitungsmaschine, bereitzustellen, die eine verbesserte Unterstützung von Werkstückteilen während der trennenden Bearbeitung und insbesondere ein vereinfachtes Ausschleusen freigeschnittener Werkstückteile ermöglicht.

### Gegenstand der Erfindung

Diese Aufgabe wird gelöst durch eine Maschine der eingangs genannten Art, bei der innerhalb des Spalts mindestens zwei in der zweiten Richtung (Y-Richtung) unabhängig voneinander (gesteuert) verfahrbare Unterstützungsschlitten angeordnet sind, die jeweils eine Auflagefläche zur Unterstützung des Werkstücks bzw. von bei der trennenden Bearbeitung geschnittenen Werkstückteilen aufweisen und die vorzugsweise unabhängig vom Bearbeitungskopf innerhalb des Spalts verfahrbar sind.

Im Spalt der erfindungsgemäßen Maschine sind mindestens zwei Unterstützungsschlitten angeordnet, deren Auflageflächen sich in X-Richtung typischer Weise annähernd über die gesamte Breite des Spalts erstrecken und die in Y-Richtung eine deutlich geringere Länge als der Spalt aufweisen. Die beiden Unterstützungsschlitten können unabhängig voneinander verfahren werden, es ist aber auch eine gekoppelte Bewegung möglich, bei welcher beide Unterstützungsschlitten synchron, d.h. mit konstantem relativen Abstand, in dem Spalt verfahren werden. Der Bereich zwischen den Auflageflächen der Unterstützungsschlitten bildet den eigentlichen Schneidbereich in dem Spalt. Durch die unabhängige Verfahrbarkeit der Unterstützungsschlitten in Y-Richtung ist dieser Schneidbereich in seiner Ausdehnung variabel. Der Schneidbereich kann zudem in Y-Richtung variabel in dem Spalt positioniert werden.

Beim schneidenden Bearbeiten wird an dem Werkstück eine Schnittkontur erzeugt und die beiden Unterstützungsschlitten sind typischer Weise so weit voneinander beabstandet, dass keine Verschmutzung oder Beschädigung durch den Bearbeitungsstrahl und ggf. gebildete Schlacke auftritt. Ein Abstand in Y-Richtung zwischen den beiden Unterstützungsschlitten, der dies ermöglicht, kann bei ca. 5 mm oder mehr liegen. Für den Freischnitt eines kippgefährdeten Werkstückteils vom (Rest-)Werkstück können die beiden Unterstützungsschlitten enger zusammengefahren werden, um ein Kippen des freigeschnittenen Werkstückteils zu verhindern und dieses flächig zu unterstützen. Bei einem solchen kippgefährdeten Werkstückteil kann es sich um ein Werkstückteil handeln, welches keine ausreichende Biegesteifigkeit aufweist und/oder welches zu kleine Abmessungen aufweist, um nach dem Freischneiden den Spalt zu überbrücken.

Unter einer Werkstückauflagefläche wird im Sinne dieser Anmeldung eine Werkstückauflage verstanden, die geeignet ist, das plattenförmige Werkstück flächig zu unterstützen. Eine solche Werkstückauflagefläche muss keine durchgehende Fläche bilden, es genügt vielmehr, wenn das Werkstück an mehreren (mindestens drei, in der Regel deutlich mehr) Stellen durch Auflageelemente (ggf. nur punktuell) unterstützt wird, um das Werkstück in einer Auflageebene zu lagern. Die Werkstückauflagefläche wird in diesem Fall von den Oberseiten der Auflageelemente gebildet. Die Werkstückauflageflächen, zwischen denen der Spalt gebildet ist, können beispielsweise in Form eines Bürsten- oder Kugeltisches ausgebildet sein. Das zu bearbeitende Werkstück wird in diesem Fall während der Bearbeitung durch viele auf bzw. in einer Tischfläche angeordnete Auflageelemente in Form von Bürsten oder (drehbaren) Kugeln gestützt, die zusammen die Werkstückauflagefläche bilden. Alternativ können parallel zum Spalt angeordnete, drehbare Rollen, deren Drehachse sich parallel zum Spalt erstreckt, als Auflageelemente zur Bildung von Werkstückauflageflächen vorgesehen sein. Außerdem ist es möglich, die Werkstückauflageflächen als umlaufende Auflagebänder zu gestalten.

Entsprechend können auch die Unterstützungsschlitten auf ihrer dem Werkstück zugewandten Seite eine durchgehende Auflagefläche aufweisen, die zur Anlage an die Werkstückunterseite gebracht werden kann. Alternativ können die Unterstützungsschlitten mehrere Auflageelemente z.B. in Form von Auflagespitzen (Pins), Kugeln, Bürsten oder Stegen aufweisen, die gemeinsam die Auflagefläche bilden, auf der das Werkstück bzw. freigeschnittene Werkstückteile aufliegen können.

Bevorzugt sind die Unterstützungsschlitten unabhängig vom Bearbeitungskopf in der zweiten Richtung (Y-Richtung) verfahrbar. Für die unabhängige Bewegung der Unterstützungsschlitten und des Bearbeitungskopfs in dem Spalt werden typischer Weise unterschiedliche Antriebe verwendet, die es ermöglichen, jeden der Unterstützungsschlitten und den Bearbeitungskopf unabhängig voneinander an unterschiedliche Positionen in Y-Richtung zu verfahren.

Bei einer Ausführungsform weist die Maschine eine zusätzliche Bewegungseinrichtung zur Bewegung des Bearbeitungskopfs in der ersten Richtung (X-Richtung) innerhalb des Spalts auf. Der Bewegungsbereich des Bearbeitungskopfs in X-Richtung (Zusatzachse) ist auf den Spalt beschränkt, d.h. die Breite des Spalts ist größer oder entspricht gerade dem Verfahrbereich des Bearbeitungskopfs in X-Richtung. Aufgrund der geringeren zu beschleunigenden Massen ist die Zusatzachsbewegung des Bearbeitungskopfs in X-Richtung dynamischer als die Bewegung des Werkstücks in X-Richtung, so dass sich insbesondere kleine Konturen sehr viel schneller mit der Achsbewegung der Zusatzachse - ggf. in Kombination mit der Bewegung des Werkstücks in X-Richtung - realisieren lassen.

Die Breite des Spalts kann deutlich größer, z.B. mehr als doppelt so groß sein wie ein Bewegungsbereich des Bearbeitungskopfs in der ersten Richtung. In diesem Fall wird nur ein verhältnismäßig kleiner Anteil der Breite des Spalts für die dynamische Zusatzachsbewegung des Bearbeitungskopfs genutzt. Der gegenüber dem Bewegungsbereich des Bearbeitungskopfs vergleichsweise breite Spalt erlaubt ein schnelles Entfernen von kleinen bis mittelgroßen Schneidbutzen, Restgitterteilen oder kleineren Werkstückteilen aus dem Schneidbereich.

Bei einer weiteren Ausführungsform weist ein erster Unterstützungsschlitten an einer einem zweiten Unterstützungsschlitten zugewandten Außenkante seiner Auflagefläche eine Aussparung auf. Aufgrund der Aussparung können die Unterstützungsschlitten beim Freischnitt eines Werkstückteils vollständig zusammen gefahren und unmittelbar benachbart zueinander positioniert werden, um eine vollflächige Unterstützung des Werkstückteils zu gewährleisten. Der Bearbeitungsstrahl trifft beim Freischnitt des Werkstückteils durch die Aussparung hindurch.

Bei einer vorteilhaften Weiterbildung weist der zweite Unterstützungsschlitten an einer dem ersten Unterstützungsschlitten zugewandten Außenkante seiner Auflagefläche eine Aussparung auf, die an derselben Stelle in der ersten Richtung (X-Richtung) positioniert ist wie die Aussparung an dem ersten Unterstützungsschlitten. Bei der benachbarten Positionierung der beiden Unterstützungsschlitten bilden die beiden Aussparungen gemeinsam eine Öffnung, durch die der Bearbeitungsstrahl beim Freischnitt des Werkstückteils hindurch treten kann. In diesem Fall wird die Bewegung des Bearbeitungskopfes und der Unterstützungsschlitten von einer Steuerungseinrichtung der Maschine so gesteuert, dass die Freischneideposition, an welcher das Werkstückteil vom (Rest-)Werkstück getrennt wird, mit der Position der Öffnung übereinstimmt, so dass die beiden Außenkanten der Unterstützungsschlitten im Moment des Freischnitts aneinander angrenzen und die Auflageflächen das freizuschneidende Werkstückteil größtmöglich unterstützen können. Die Aussparungen können insbesondere zueinander komplementär ausgebildet sein, d.h. die durch die Aussparungen gebildete Öffnung weist zwei spiegelsymmetrische Hälften auf. Die Aussparungen können beispielsweise eine halbkreisförmige oder eine rechteckige Geometrie aufweisen und gemeinsam eine kreisförmige oder rechteckige, insbesondere quadratische Öffnung bilden.

Bei einer weiteren Ausführungsform weist die Auflagefläche mindestens eines Unterstützungsschlittens einen Teilbereich aus einem hitzebeständigen und funkenundurchlässigen Material auf. Die Auflagefläche eines jeweiligen Unterstützungsschlittens kann zwei oder mehr Teilbereiche aufweisen, wobei derjenige Teilbereich der Auflagefläche, der beim Freischnitt direkt angrenzend an den Bearbeitungsstrahl positioniert wird, aus einem hitzebeständigen, beispielsweise metallischen Material bestehen sollte, um Beschädigungen und insbesondere ein Abbrennen der Auflagefläche zu vermeiden.

Bei einer Weiterbildung weist die Auflagefläche des mindestens einen Unterstützungsschlittens einen weiteren Teilbereich auf, der als Bürstenauflage ausgebildet ist. Dieser Teilbereich erstreckt sich typischer Weise nicht in die Nähe derjenigen Außenkante der Auflagefläche, die beim Freischnitt direkt angrenzend zum Bearbeitungsstrahl positioniert wird. Die Bürstenauflage unterstützt das Werkstück bzw. Werkstückteil kratzerfrei. Der Teilbereich des Unterstützungsschlittens, der funkenundurchlässig ausgebildet ist, wirkt als Schranke zwischen dem Bearbeitungsstrahl und der Bürstenauflage und verhindert eine Beschädigung der Bürsten durch Funkenflug.

Bei einer Weiterbildung ist eine Bürstenhöhe des als Bürstenauflage ausgebildeten Teilbereichs der Auflagefläche größer als eine Erstreckung einer zum Klemmen des Werkstücks bei dessen Bewegung in der ersten Richtung vorgesehenen Klemmeinrichtung (beispielsweise einer Spannpratze) unter die Werkstückauflageflächen. In diesem Fall kann der als Bürstenauflage ausgebildete Teilbereich in Y-Richtung zumindest teilweise bis unter die typischer Weise seitlich angeordneten Klemmeinrichtungen des Werkstücks verfahren werden, so dass der für das schneidende Bearbeiten nutzbare Bereich des Spalts in Y-Richtung vergrößert wird.

Vorzugsweise kann mindestens einer der Unterstützungsschlitten in eine Parkposition außerhalb des Verfahrbereichs des Bearbeitungskopfs in Y-Richtung, typischer Weise an eine Position außerhalb des Spalts, verfahren werden. Große Werkstückteile, die sich in X-Richtung über den Spalt hinaus erstrecken, können bei ausreichender Steifigkeit ohne Unterstützung durch die Unterstützungsschlitten geschnitten werden, da die Unterstützung solcher Werkstückteile im Spalt nicht erforderlich ist. Beim Schneiden derartiger Werkstückteile sollten die Unterstützungsschlitten möglichst weit auseinander gefahren werden, so dass diese sich nicht im Schneidbereich befinden und nicht verschmutzen können, was durch die Positionierung in der Parkposition außerhalb des Verfahrbereichs des Bearbeitungskopfs sichergestellt wird.

Bei einer Ausführungsform ist die Auflagefläche mindestens eines Unterstützungsschlittens und/oder mindestens einer der Unterstützungsschlitten selbst in Schwerkraftrichtung (Z-Richtung) verfahrbar. Um einen Kontakt der Unterstützungsschlitten mit dem Werkstück gezielt zu vermeiden oder herzustellen, können die Unterstützungsschlitten oder deren Auflagefläche relativ zum restlichen Unterstützungsschlitten in Z-Richtung verfahrbar ausgeführt sein. Während des Verfahrens der Unterstützungsschlitten in Y-Richtung in dem Spalt können auf diese Weise die Unterstützungsschlitten oder deren Auflageflächen geringfügig abgesenkt werden, so dass es nicht zu einem Verkratzen der Werkstückunterseite durch die Auflageflächen bzw. durch die Unterstützungsschlitten kommt. Vor dem Freischnitt können die Auflageflächen bzw. die Unterstützungsschlitten durch Anheben in direkten Kontakt mit der Werkstückunterseite gebracht werden.

Die Höhenverstellbarkeit der Unterstützungsschlitten kann auch genutzt werden, um die Prozesssicherheit beim Ausschleusen von Werkstückteilen zu steigern. Das Ausschleusen von freigeschnittenen Werkstückteilen nach unten durch gesteuertes Absenken der Auflageflächen stellt sicher, dass die Werkstückteile beim Lösen aus dem Restwerkstück durch die Auflageflächen unterstützt werden und nicht im Restgitter bzw. Restwerkstück verkippen oder verkanten. Ein verkantetes Werkstückteil kann außerdem durch Wiederanheben der Auflageflächen bis an die Werkstückunterseite oder durch Klopfen gegen das (Rest-)Werkstück gelöst werden. Bei einer weiteren Ausführungsform ist die Auflagefläche mindestens eines Unterstützungsschlittens und/oder mindestens einer der Unterstützungsschlitten selbst nach unten schwenkbar. Die Unterstützungsschlitten oder deren Auflageflächen können schwenkbar ausgeführt sein, so dass auf den Auflageflächen nach dem Freischnitt aufliegende Werkstückteile durch eine Schwenkbewegung nach unten abrutschen können. Die Schwenkbewegung kann über eine den Unterstützungsschlitten gemeinsame, sich in Y-Richtung erstreckende Achse oder über zueinander beabstandete, sich in X-Richtung erstreckende Achsen erfolgen. Auch eine aufeinanderfolgende oder kombinierte Absenk- und Schwenkbewegung ist möglich.

Bei einer weiteren Ausführungsform ist mindestens einer der Unterstützungsschlitten mechanisch an mindestens eine feststehende, benachbart zum Spalt angeordnete Ausschleusklappe angebunden und entlang der Ausschleusklappe verfahrbar geführt, sodass ein Schwenken des mindestens einen Unterstützungsschlittens zusammen mit der oder den Ausschleusklappen ausgeführt werden kann. Das Ausschleusen von auf den Auflageflächen aufliegenden Werkstückteilen kann in diesem Fall beispielsweise durch ein langsames Absenken der Ausschleusklappe gemeinsam mit den Unterstützungsschlitten nach unten und eine anschließende schnelle Kippbewegung der Ausschleusklappe zusammen mit den Unterstützungsschlitten erfolgen. Auf diese Weise wird sichergestellt, dass Werkstückteile prozesssicher nach unten aus dem Restgitter bzw. aus dem Restwerkstück entnommen werden können.

Die gemeinsame Bewegung bzw. die Anbindung der Unterstützungsschlitten an die Ausschleusklappe kann beispielsweise über ein Gestänge erfolgen. Alternativ zur Ausschleusung durch Verschwenken eines bzw. beider Unterstützungsschlitten kann das Ausschleusen auch ausschließlich durch Verschwenken und ggf. Absenken der benachbart zu dem Spalt angeordneten Ausschleusklappe erfolgen. Die Ausschleusklappe erschreckt sich typischer Weise über die gesamte Länge des Spalts bzw. des Verfahrbereichs des Bearbeitungskopfs in Y-Richtung und kann ggf. in Y-Richtung mehrere Segmente aufweisen, die einzeln verschwenkbar sind.

Bei einer weiteren Ausführungsform ist an mindestens einem Unterstützungsschlitten - typischer Weise benachbart zur Auflagefläche - ein Kleinteilebehälter und/oder eine Teilerutsche angebracht. Der Kleinteilebehälter, z.B. in der Art eines Korbs, dient zum Auffangen von beim trennenden Bearbeiten gebildeten kleinen Schneidbutzen oder Werkstückteilen, die beim Freischneiden und Ausschleusen nicht von unten durch die Unterstützungsschlitten unterstützt werden müssen. Beim Schneiden kleiner Butzen oder Werkstückteile, die nicht auf der Auflagefläche des Unterstützungsschlittens aufliegen müssen, kann alternativ eine Kleinteilerutsche kurz vor dem Freischnitt unter das freizuschneidende Werkstückteil gefahren werden. Auf diese Weise ist eine Trennung in frei durch den Spalt fallende Schrott-Teile und über die Teilerutsche ausgeschleuste Gutteile möglich. Ergänzend kann durch eine dynamische Bewegung des Unterstützungsschlittens innerhalb des Spalts eine Relativbewegung des Unterstützungsschlittens zu einem auf der Auflagefläche aufliegenden Werkstückteil erzeugt werden. Das Werkstückteil kann der dynamischen Bewegung des Unterstützungsschlittens nicht folgen, so dass der Unterstützungsschlitten relativ zum idealer Weise bei dieser Bewegung ortsfesten Werkstückteil seitlich versetzt wird. Auf diese Weise wird an Stelle der Auflagefläche die benachbart angeordnete Teilerutsche oder der Kleinteilebehälter des Unterstützungsschlittens unter dem Werkstückteil positioniert, um das Werkstückteil auzuschleusen bzw. um das Werkstückteil aufzunehmen.

Zusätzlich zu den zwei Unterstützungsschlitten, zwischen denen die schneidende Bearbeitung mittels des Bearbeitungskopfs stattfindet, können zur Außenseite des Bearbeitungsbereichs in Y-Richtung hin weitere Unterstützungs- oder Spaltüberbrückungselemente in dem Spalt angeordnet sein. Weitere in dem Spalt verfahrbare Unterstützungsschlitten ermöglichen eine bessere Unterstützung des Werkstücks auch in größerer Entfernung vom Bearbeitungskopf.

Bei einer Ausführungsform ist mindestens einer, typischer Weise sind zwei der Unterstützungsschlitten jeweils mit einem Überdeckungselement zur Überdeckung des Spalts verbunden. Die Überdeckungselemente können beispielsweise an den Außenkanten von zwei Unterstützungsschlitten angebracht werden, die den Außenseiten des Bearbeitungsbereichs in Y-Richtung am nächsten liegen. Die Überdeckungselemente können mit den Unterstützungsschlitten mit bewegt werden. Auf diese Weise kann eine Überdeckung des Spalts in Bereichen erfolgen, in denen keine schneidende Bearbeitung stattfindet. Das Überdeckungselement kann rolladenförmig, teleskopförmig, schuppenförmig, als aufgerolltes Band, insbesondere als Bürstenband, etc. ausgeführt sein und erstreckt sich typischer Weise über die gesamte Breite des Spalts (in X-Richtung). Das Überdeckungselement kann als Auflage für Teilbereiche des Restwerkstücks dienen, an denen momentan keine schneidende Bearbeitung stattfindet. Dies ist insbesondere bei zungenartigen, nicht biegesteifen Teilbereichen des Restwerkstücks vorteilhaft, die ansonsten ggf. in den Spalt hineinragen und mit den Unterstützungsschlitten kollidieren könnten.

Angrenzend an die Werkstückauflageflächen, zwischen denen der Spalt gebildet ist, können außerdem in den Randbereichen des Spalts sich in Y-Richtung erstreckende, austauschbare Verschleißelemente, beispielsweise in Form von Rollen oder dergleichen angeordnet sein. Diese Verschleißelemente dienen zum Schutz der Kanten der Werkstückauflageflächen bei der Bewegung des Werkstücks in X-Richtung. Die Verschleißelemente sind vorzugsweise als drehbar gelagerte Rollen ausgebildet, um ein Verkratzen des Werkstücks bei der Bewegung zu vermeiden.

Bei einer weiteren Ausführungsform umfasst die Werkzeugmaschine eine Steuerungseinrichtung, welche ausgebildet bzw. programmiert ist, mindestens einen der Unterstützungsschlitten, insbesondere genau zwei der Unterstützungsschlitten unter einem beim trennenden Bearbeiten freizuschneidenden Werkstückteil zu positionieren. Bei dem Werkstückteil handelt es sich typischer Weise um ein kippgefährdetes Werkstückteil, welches in einem zwischen den beiden Unterstützungsschlitten gebildeten Schneidbereich vom Restwerkstück freigeschnitten wird. Das vollständig freigeschnittene Werkstückteil liegt nach dem Freischneiden zumindest teilweise auf der bzw. auf den Auflageflächen von einem oder von beiden Unterstützungsschlitten so auf, dass die Auflageflächen das Werkstückteil an einer durch den Schneidgasdruck (oder Wasserdruck) verursachten Kippbewegung hindern.

Die Steuerungseinrichtung dient zum gesteuerten Verfahren der Unterstützungsschlitten in dem Spalt in Y-Richtung. Die Positionierung der Unterstützungsschlitten kann synchron mit der Bewegung des Bearbeitungskopfs in Y-Richtung sowie ggf. in X-Richtung erfolgen. Die Bewegung der Unterstützungsschlitten kann aber auch unabhängig von der Bewegung des Bearbeitungskopfs in Y-Richtung erfolgen. Auf diese Weise können die Unterstützungsschlitten, falls diese z.B. beim Schneiden großer Werkstückteile nicht benötigt werden, von der Bearbeitungsposition, an welcher der Bearbeitungsstrahl positioniert ist, beabstandet angeordnet werden und beispielsweise in eine Parkposition außerhalb des Verfahrbereichs des Bearbeitungskopfs verbracht werden. Werden die Unterstützungsschlitten zur Unterstützung von kippgefährdeten Werkstückteilen benötigt, können diese aneinander angrenzend benachbart zur Bearbeitungsposition angeordnet werden.

Bei einer Weiterbildung ist die Steuerungseinrichtung ausgebildet bzw. programmiert, die Bewegung des Werkstücks, des Bearbeitungskopfs und der Unterstützungsschlitten derart zu steuern, dass das Freischneiden des Werkstückteils, d.h. das endgültige Trennen des Werkstückteils vom Restwerkstück, an einer Freischneideposition erfolgt, die zwischen zwei einander gegenüber liegenden Aussparungen in den Auflageflächen der Unterstützungsschlitten gebildet ist. Wie weiter oben beschrieben wurde, erfolgt das schneidende Bearbeiten und auch das Freischneiden typischer Weise zwischen zwei der Unterstützungsschlitten, die für das Freischneiden idealer Weise unmittelbar benachbart zueinander in dem Spalt angeordnet werden, so dass das freigeschnittene Werkstückteil von beiden Auflageflächen so unterstützt wird, dass es nicht in den Spalt kippen kann.

Ein weiterer Aspekt der Erfindung betrifft ein Verfahren zum trennenden Bearbeiten eines Werkstücks an einer Maschine wie oben beschrieben, umfassend: Positionieren von mindestens einem der Unterstützungsschlitten unter einem beim trennenden Bearbeiten freizuschneidenden Werkstückteil. Wie weiter oben im Zusammenhang mit der Steuerungseinrichtung beschrieben wurde, können die Unterstützungsschlitten zur Unterstützung von kippgefährdeten, typischer Weise kleinen bzw. nicht biegesteifen Werkstückteilen in der Nähe der Bearbeitungsposition angeordnet werden. Bei der Bearbeitung von nicht kippgefährdeten, größeren und biegesteifen Werkstückteilen können die bzw. einer der Unterstützungsschlitten weiter beabstandet zur Bearbeitungsposition, beispielsweise an einer Parkposition, angeordnet werden.

Bei einer Variante umfasst das Verfahren zusätzlich: Freischneiden des Werkstückteils an einer Freischneideposition, die derart gewählt ist, dass das Werkstückteil beim Freischnitt durch die Auflageflächen der beiden Unterstützungsschlitten unterstützt wird, also auf beiden Auflageflächen aufliegt. Insbesondere ist die Freischneideposition zwischen zwei einander gegenüber liegenden Aussparungen an den Außenkanten der Auflageflächen der Unterstützungsschlitten angeordnet. Im letztgenannten Fall werden die Unterstützungsschlitten vor dem Freischneiden des Werkstückteils, d.h. vor dem Moment der vollständigen Trennung vom Restwerkstück, direkt aneinander angrenzend positioniert. Die Bewegung von Werkstück, Bearbeitungskopf und Unterstützungsschlitten wird so gesteuert, dass der Bearbeitungsstrahl im Moment des Freischnitts durch die von den Aussparungen gebildete Öffnung tritt. Auf diese Weise kann das Werkstückteil beim Freischneiden von den beiden Unterstützungsschlitten vollflächig unterstützt werden.

Bei einer Weiterbildung werden vor dem Freischneiden eines Werkstückteils die beiden Unterstützungsschlitten in dem Spalt aufeinander zu bewegt, bis die beiden Unterstützungsschlitten benachbart, bevorzugt unmittelbar benachbart in dem Spalt angeordnet sind. Sind an den Außenkanten der Auflageflächen keine Aussparungen vorgesehen, werden die beiden Unterstützungsschlitten benachbart, d.h. in einem geringen Abstand voneinander angeordnet, der ausreichend ist, um die Bearbeitung des Werkstücks mit dem Bearbeitungsstrahl vorzunehmen, ohne die Unterstützungsschlitten zu beschädigen. Ist an mindestens einem der Unterstützungsschlitten eine Aussparung gebildet, kann der Bearbeitungsstrahl durch die von der Aussparung bzw. von den Aussparungen begrenzte Öffnung hindurchtreten, so dass die Unterstützungsschlitten beim Freischnitt vollständig zusammen gefahren und unmittelbar benachbart, d.h. idealer Weise in einem Abstand von annähernd 0 mm, voneinander positioniert werden können.

In einer Weiterbildung sind die Auflageflächen der Unterstützungsschlitten und/oder die Unterstützungsschlitten selbst während der Bewegung aufeinander zu unter die von den Auflageflächen gebildete Auflageebene des Werkstücks abgesenkt, um eine Berührung der Unterseite des Werkstücks und ein Verkratzen der zu verhindern. Bevorzugt werden die Auflageflächen der Unterstützungsschlitten und/oder die Unterstützungsschlitten selbst während der Bewegung aufeinander zu angehoben, um das Werkstückteil beim Freischneiden zu unterstützen. Es kann also der Bewegung der Unterstützungsschlitten in Y-Richtung eine Bewegung in Z-Richtung überlagert werden, um einen durch das Anheben der Auflageflächen auf das Niveau der Werkstückauflageflächen bedingten Zeitverlust zu vermeiden.

Zum Ausschleusen eines freigeschnittenen Werkstückteils aus der Maschine bestehen mehrere Möglichkeiten eines Ausschleusverfahrens:
Bei einer Variante erfolgt das Ausschleusen des freigeschnittenen Werkstückteils durch Vergrößern eines Abstands zwischen den beiden Unterstützungsschlitten in der zweiten Richtung (Y-Richtung). Bei dieser Variante werden die beiden Unterstützungsschlitten so weit voneinander weg bewegt, dass das freigeschnittene Werkstückteil die flächige Unterstützung durch die Auflageflächen verliert und idealer Weise im freien Fall zwischen den Unterstützungsschlitten nach unten fällt und aus dem Bearbeitungsbereich entfernt werden kann. Insbesondere kann das Vergrößern des Abstandes durch eine symmetrische Bewegung der Unterstützungsschlitten erfolgen, d.h. diese werden mit betragsmäßig gleicher (und typischer Weise hoher) Geschwindigkeit bzw. Beschleunigung auseinandergefahren, so dass das Werkstückteil beim Vergrößern des Abstands nicht seitlich verschoben wird.

Bei einer weiteren Variante erfolgt das Ausschleusen des freigeschnittenen Werkstückteils durch Schwenken der Auflagefläche mindestens eines Unterstützungsschlittens und/oder durch Schwenken des mindestens einen Unterstützungsschlittens selbst nach unten. Die Schwenkbewegung kann beispielsweise über eine beiden Unterstützungsschlitten gemeinsame, in Y-Richtung verlaufende Drehachse oder über zwei unterschiedliche, in X-Richtung verlaufende Drehachsen erfolgen.

Bei einer Variante werden die Auflageflächen der Unterstützungsschlitten und/oder die Unterstützungsschlitten selbst vor dem Ausschleusen oder während des Ausschleusens des freigeschnittenen Werkstückteils abgesenkt. Die Absenkbewegung der Auflageflächen bzw. der Unterstützungsschlitten kann der Schwenkbewegung oder dem hochdynamischen Auseinanderfahren der Unterstützungsschlitten vorangestellt oder überlagert werden, um das Werkstückteil sicher aus dem Restwerkstück zu lösen und/oder die Haftreibung des Werkstückteils auf den Auflageflächen zu verringern.

Bei dem freigeschnittenen Werkstückteil kann es sich sowohl um ein Gutteil als auch um ein Restteil handeln, das entsorgt werden muss. Unterhalb der Werkstückauflageflächen bzw. unter dem Spalt können Gutteile und Restteile beispielsweise von einer Teilerutsche, von Förderbändern, etc. aufgenommen werden und von der bei der Bearbeitung anfallenden Schlacke sowie voneinander getrennt werden.

Bei einer bevorzugten Variante werden die Unterstützungsschlitten mit dem auf den Auflageflächen aufliegenden freigeschnittenen Werkstückteil in einer bevorzugt synchronen Bewegung an eine Ausschleusposition innerhalb des Spalts verfahren. Unter einer synchronen Bewegung wird verstanden, dass der Abstand zwischen den beiden Unterstützungsschlitten in Y-Richtung während der Bewegung konstant bleibt. Bei dieser Variante wird die Höhenverstellbarkeit sowie die Verfahrbarkeit der Unterstützungsschlitten bzw. der Auflageflächen genutzt, um das freigeschnittene Werkstückteil an eine von der Position des Freischnittes unabhängige Ausschleusposition zu verbringen. Die Absenkbewegung der Auflageflächen bzw. der Unterstützungsschlitten ermöglicht es hierbei, ein freigeschnittenes Werkstückteil so weit abzusenken, dass dieses unterhalb des Restwerkstücks in Y-Richtung bewegt und in eine gewünschte Ausschleusposition verbracht werden kann. Das Ausschleusen an einer frei wählbaren Ausschleusposition in Y-Richtung kann genutzt werden, um Werkstückteile zu sortieren oder ein Werkstückteil nach dem Freischneiden an den Rand des Spalts zu fördern und einem Maschinenbediener manuell zugänglich zu machen.

Alternativ oder zusätzlich zum Ausschleusen durch den Spalt kann auch eine Entnahme der Werkstückteile nach oben über Saug- oder Magnetgreifer erfolgen. Sofern die Werkstückauflageflächen als Förderbänder ausgebildet sind, kann ein Ausschleusen auch durch eine Bewegung der bandförmigen Werkstückauflageflächen in der ersten Richtung (X-Richtung) erfolgen. Sofern mindestens eine der beiden Werkstückauflageflächen an einer Seite des Spalts eine oder mehrere Ausschleusklappen aufweist, können freigeschnittene Werkstückteile auch durch eine Schwenkbewegung der Klappe(n) nach unten aus dem Bearbeitungsbereich entfernt werden. Insbesondere wenn mindestens einer der Unterstützungsschlitten mechanisch, z.B. über ein Gestänge, mit einer Ausschleusklappe gekoppelt ist, kann auch eine gemeinsame Schwenkbewegung des Unterstützungsschlittens und der Ausschleusklappe erfolgen, um freigeschnittene Werkstückteile prozesssicher auszuschleusen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Darstellung eines Ausführungsbeispiels einer Laserbearbeitungsmaschine mit zwei in einem Spalt verfahrbaren Unterstützungsschlitten beim trennenden Bearbeiten eines plattenförmigen Werkstücks,
- Fig. 2: eine Darstellung der Maschine von Fig. 1 beim Freischneiden eines Werkstückteils vom Restwerkstück,
- Fig. 3a,b: Darstellungen von Unterstützungsschlitten, die jeweils eine Auflagefläche mit zwei unterschiedlich ausgebildeten Teilbereichen aufweisen,
- Fig. 4a-e: Darstellungen von zwei Unterstützungsschlitten beim Transport eines freigeschnittenen Werkstückteils an eine Ausschleusposition,
- Fig. 5: eine Darstellung eines Unterstützungsschlittens in einer Parkposition außerhalb eines Bearbeitungsbereichs,
- Fig. 6: eine Darstellung eines Unterstützungsschlittens mit einer seitlich angebrachten Teilerutsche, und
- Fig. 7: eine Darstellung eines Unterstützungsschlittens mit einem seitlich angebrachten Kleinteilebehälter.

In der folgenden Beschreibung der Zeichnungen werden für gleiche bzw. für funktionsgleiche Bauteile identische Bezugszeichen verwendet.

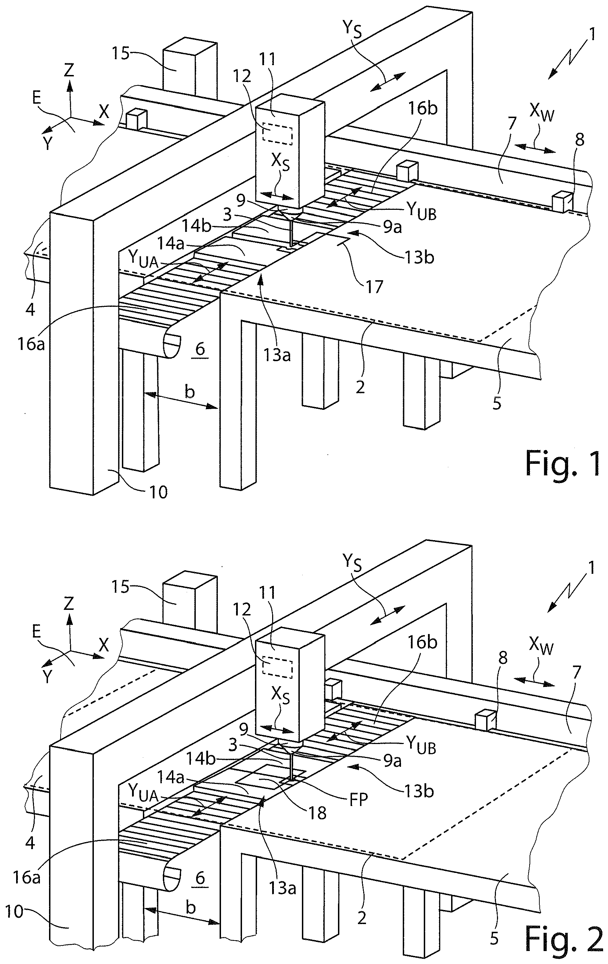

**Fig. 1** zeigt einen beispielhaften Aufbau einer Maschine 1 zur Laserbearbeitung, genauer gesagt zum Laserschneiden, eines gestrichelt dargestellten plattenförmigen Werkstücks 2 mittels eines Laserstrahls 3. Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden. Das Werkstück 2 liegt bei der Bearbeitung auf zwei Werkstückauflageflächen 4, 5 auf, die im gezeigten Beispiel die Oberseiten von zwei Werkstücktischen bilden und eine Auflageebene E (X-Y-Ebene eines XYZ-Koordinatensystems) zur Auflage des Werkstücks 2 definieren Die Werkstückauflageflächen 4, 5 können durch Tischflächen oder durch stiftförmige Auflageelemente (Pins), Auflagebänder, Bürsten, Rollen, Kugeln, Luftpolster o.ä. gebildet werden.

Mittels einer herkömmlichen Bewegungs- und Halteeinrichtung 7, welche einen Antrieb sowie Klemmeneinrichtungen 8 in Form von Spannpratzen zum Festhalten des Werkstücks 2 aufweist, kann das Werkstück 2 auf den Werkstückauflageflächen 4, 5 in einer ersten Bewegungsrichtung X (im Folgenden: X-Richtung) gesteuert verschoben und an eine vorgegebene Werkstückposition X_{W} bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, die die eigentliche Auflageflächen 4, 5 darstellen. Alternativ ist es beispielsweise möglich, zur Bewegung oder zur Unterstützung der Bewegung des Werkstücks 2 in X-Richtung die Werkstückauflageflächen 4, 5 selbst als Bewegungseinrichtung auszugestalten, beispielsweise in Form eines (umlaufenden) Förderbandes, wie dies in der DE 10 2011 051 170 A1 der Anmelderin beschrieben ist, oder in Form einer Werkstückauflage, wie sie in der JP 06170469 beschrieben ist.

Zwischen den beiden Werkstückauflageflächen 4, 5 ist ein Spalt 6 gebildet, der sich in einer zweiten Richtung (im Folgenden: Y-Richtung) über den gesamten Verfahrweg eines Laserschneidkopfs 9 erstreckt, der den Laserstrahl 3 auf das Werkstück 2 ausrichtet und fokussiert. Der Laserschneidkopf 9 ist mittels eines als Bewegungseinrichtung dienenden angetriebenen Schlittens 11, der an einem fest stehenden Portal 10 geführt ist, innerhalb des Spalts 6 in Y-Richtung gesteuert verfahrbar. Der Laserschneidkopf 9 ist im gezeigten Beispiel innerhalb des Spalts 6 zusätzlich auch in X-Richtung gesteuert verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden. Der maximale Verfahrweg des Laserschneidkopfs 9 in X-Richtung ist im gezeigten Beispiel geringer als die Breite b des Spalts 6.

Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition X_{S}, Y_{S} innerhalb des Spalts 6 positioniert werden. Gegebenenfalls kann der Laserschneidkopf 9 auch entlang einer dritten Bewegungsrichtung Z (Schwerkraftrichtung, im Folgenden: Z-Richtung) verschoben werden, um den Abstand zwischen der Bearbeitungsdüse 9a und der Werkstückoberfläche einzustellen.

Innerhalb des Spalts 6 sind zwei Unterstützungsschlitten 13a, 13b angeordnet, die sich jeweils über die gesamte Breite b des Spalts 6 erstrecken und in dem Spalt 6 in Y-Richtung gesteuert und unabhängig voneinander verfahrbar sind. Die gesteuerte Bewegung der Unterstützungsschlitten 13a, 13b in dem Spalt 6 kann beispielsweise mit Hilfe von Spindelantrieben erfolgen, wobei die Spindelmutter an dem jeweiligen Unterstützungsschlitten 13a, 13b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 13a, 13b in dem Spalt 6 auch auf andere Weise realisiert werden kann.

Die Unterstützungsschlitten 13a, 13b können in dem Spalt 6 jeweils an eine gewünschte Position Y_{UA}, Y_{UB} in Y-Richtung bewegt werden, um dort das Werkstück 2, genauer gesagt von dem Werkstück 2 freizuschneidende bzw. beim Bearbeiten geschnittene Werkstückteile, mittels einer an dem jeweiligen Unterstützungsschlitten 13a, 13b angebrachten Auflagefläche 14a, 14b zu unterstützen. Die Auflagefläche 14a, 14b eines jeweiligen Unterstützungsschlittens 13a, 13b schließt im gezeigten Fall in Z-Richtung bündig mit den Werkstückauflageflächen 4, 5 ab, d.h. die Auflageflächen 14a, 14b befinden sich in der Auflageebene E für das Werkstück 2.

Zur Steuerung der schneidenden Bearbeitung weist die Maschine 1 eine Steuerungseinrichtung 15 auf, die zur Koordinierung der Bewegungen des Werkstücks 2, des Laserschneidkopfs 9 sowie der Unterstützungsschlitten 13a, 13b dient, um eine gewünschte Werkstückposition X_{W}, eine gewünschte Schneidkopfposition X_{S}, Y_{S} sowie eine gewünschte Position Y_{UA}, Y_{UB} der Unterstützungsschlitten 13a, 13b einzustellen, um das Schneiden einer vorgegebenen Schnittkontur zu ermöglichen und das Werkstück falls erforderlich im Bereich des Spalts 6 zu unterstützen.

Die Bewegung der Unterstützungsschlitten 13a, 13b kann synchron erfolgen, d.h. der Abstand zwischen der Position Y_{UA} des ersten Unterstützungsschlittens 13a und der Position Y_{UB} des zweiten Unterstützungsschlittens in Y-Richtung während der Bewegung ist konstant. Die Bewegung des ersten Unterstützungsschlittens 13a kann auch unabhängig von der Bewegung des zweiten Unterstützungsschlittens erfolgen, d.h. der Abstand zwischen der Position Y_{UA} des ersten Unterstützungsschlittens 13a und der Position Y_{UB} des zweiten Unterstützungsschlittens 13b in Y-Richtung verändert sich während der Bewegung in Y-Richtung.

Die Möglichkeit, die Unterstützungsschlitten 13a, 13b unabhängig voneinander in dem Spalt 6 zu verfahren, kann genutzt werden, um die Ausdehnung eines zwischen den beiden Unterstützungsschlitten 13a, 13b gebildeten Schneidbereichs in Y-Richtung zu variieren. Bei der in Fig. 1 dargestellten Erzeugung einer Schnittkontur 17 in dem Werkstück 2 sind die beiden Unterstützungsschlitten 13a, 13b so weit voneinander beabstandet, dass keine Verschmutzung oder Beschädigung durch den zwischen den beiden Unterstützungsschlitten 13a, 13b positionierten Laserstrahl 3 auftritt.

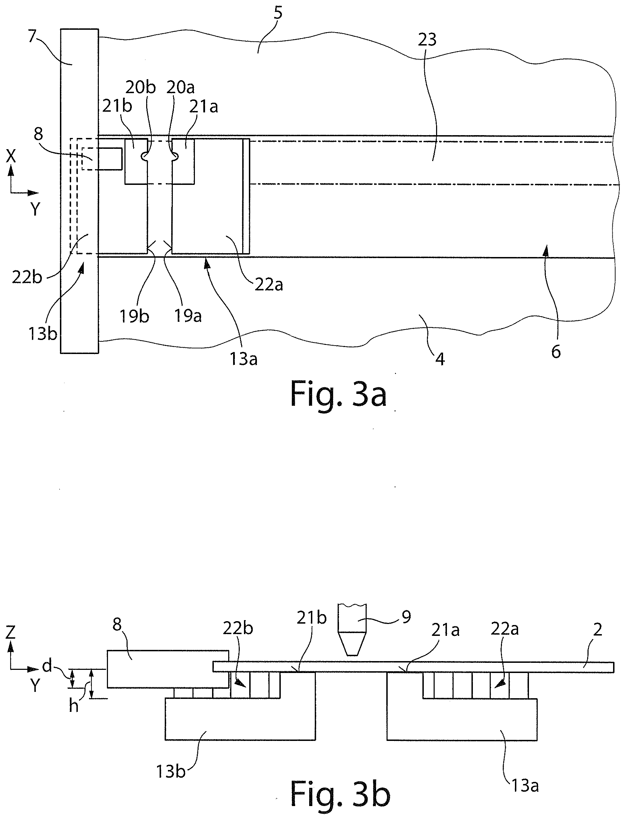

Für den Freischnitt eines Werkstückteils 18 vom Restwerkstück 2, d. h. beim Trennen der letzten Verbindung zwischen dem Werkstückteil 18 und dem Restwerkstück 2, können die beiden Unterstützungsschlitten 13a, 13b enger zusammengefahren werden, so dass zwischen diesen nur ein sehr geringer Abstand oder kein Abstand in Y-Richtung mehr verbleibt, wie dies in **Fig. 2** dargestellt ist. Durch die benachbarte, insbesondere die unmittelbar benachbarte Positionierung der beiden Unterstützungsschlitten 13a, 13b kann das Werkstückteil 18 beim Freischneiden flächig unterstützt werden und so ein Kippen des Werkstückteils 18 und insbesondere ein Verhaken mit dem Restwerkstück 2 verhindert werden. Die unmittelbar benachbarte Positionierung der beiden Unterstützungsschlitten 13a, 13b ist dadurch möglich, dass die Auflageflächen 14a, 14b an den einander zugewandten Außenkanten 19a, 19b jeweils eine Aussparung 20a, 20b (siehe Fig. 3a) für den Durchtritt des Laserstrahls aufweisen.

Bei dem in Fig. 1 und Fig. 2 gezeigten Beispiel ist an den Unterstützungsschlitten 13a, 13b, genauer gesagt an den in X-Richtung verlaufenden, voneinander abgewandten Außenkanten der Auflageflächen 14a, 14b jeweils ein Überdeckungselement 16a, 16b zur Abdeckung des Spalts 6 außerhalb des zwischen den Unterstützungsschlitten 13a, 13b gebildeten Schneidbereichs angebracht. Die Überdeckungselemente 16a, 16b erstrecken sich über die gesamte Breite b des Spalts 6, werden beim Bewegen der Unterstützungsschlitten 13a, 13b in Y-Richtung mitbewegt und sind im gezeigten Beispiel rolladenförmig ausgebildet. Die Überdeckungselemente 16a, 16b können auch auf andere Weise, z.B. teleskopförmig, schuppenförmig, als aufgerolltes Band, etc. ausgebildet sein. Die Oberseite der Überdeckungselemente 16a, 16b befindet sich auf der Höhe der Auflageflächen 14a, 14b bzw. der Werkstückauflageflächen 4, 5. Die Überdeckungselemente 16a, 16 dienen zur Auflage von in den Spalt 6 hinein ragenden, nicht biegesteifen Teilbereichen des Restwerkstücks 2, die ohne eine solche Auflage gegebenenfalls mit den Unterstützungsschlitten 13a, 13b kollidieren könnten.

Wie in **Fig. 3a** zu erkennen ist, weist der erste Unterstützungsschlitten 13a an seiner dem zweiten Unterstützungsschlitten 13b zugewandten, sich in X-Richtung erstreckenden Außenkante 19a eine halbkreisförmige Aussparung 20a auf. Analog weist auch der zweite Unterstützungsschlitten 13b an seiner dem ersten Unterstützungsschlitten 13a zugewandten, sich in X-Richtung erstreckenden Außenkante 19b eine halbkreisförmige Aussparung 20b auf. Die beiden Aussparungen 20a, 20b sind an der gleichen Stelle in X-Richtung positioniert, so dass diese beim vollständigen Zusammenfahren der beiden Unterstützungsschlitten 13a, 13b (vgl. Fig. 2) eine kreisförmige Öffnung für den Durchtritt des Laserstrahls 3 bilden. Die beiden Aussparungen 20a, 20b ermöglichen es, die Unterstützungsschlitten 13a, 13b beim Freischneiden unmittelbar benachbart zueinander anzuordnen, um eine vollflächige Unterstützung des freizuschneidenden Werkstückteils 18 zu ermöglichen. Die komplementäre bzw. zueinander spiegelsymmetrische Geometrie der Aussparungen 20a, 20b ermöglicht es, die Steuerung der beiden Unterstützungsschlitten 13a, 13b zu vereinfachen.

Bei dem in Fig. 3a gezeigten Beispiel sind die Auflageflächen 14a, 14b der beiden Unterstützungsschlitten 13a, 13b zweigeteilt, d.h. diese weisen jeweils einen ersten Teilbereich 21a, 21b aus einem strahlungsunempfindlichen und harten, beispielsweise metallischen Material, z.B. aus Kupfer, sowie einen zweiten Teilbereich 22a, 22b auf, der als Bürstenauflage ausgebildet ist. Die beiden ersten Teilbereiche 21a, 21b sind jeweils unmittelbar angrenzend zu einer der einander gegenüber liegenden Außenkanten 19a, 19b der Auflageflächen 14a, 14b angeordnet (vgl. auch Fig. 1 und Fig. 2) und weisen jeweils eine glatte Oberseite auf, um beim Freischneiden eine flächige Unterstützung des Werkstückteils 18 zu ermöglichen.

Die Ausdehnung der ersten Teilbereiche 21a, 21b in X-Richtung ist bei dem in Fig. 3a gezeigten Beispiel nicht größer als die Ausdehnung des Bearbeitungsbereichs 23 in X-Richtung. Der Bearbeitungsbereich 23 umfasst diejenigen Schneidkopfpositionen X_{S}, an denen der Laserstrahl 3 durch Verfahren des Laserschneidkopfs 9 in X-Richtung positioniert werden kann. Wie in Fig. 3a ebenfalls zu erkennen ist, ist die Breite des Spalts 6 mehr als doppelt so groß wie die Ausdehnung des Bearbeitungsbereichs 23 in X-Richtung.

Wie weiter oben beschrieben wurde, sind die zweiten Teilbereiche 22a, 22b als Bürstenauflagen ausgebildet, d.h. diese weisen eine Mehrzahl von in **Fig. 3b** gezeigten Bürsten auf, die sich von einer zur Oberseite des ersten Teilbereichs 21a, 21b um eine Bürstenhöhe h nach unten versetzten Oberfläche des zweiten Teilbereichs 22a, 22b nach oben erstrecken. Da die Bürsten des als Bürstenauflage ausgebildeten zweiten Teilbereichs 22b flexibel sind, kann der zweite Unterstützungsschlitten 13b teilweise unter die als Spannpratze 8 ausgebildete Klemmeinrichtung verfahren werden, wie dies in Fig. 3a,b dargestellt ist. Voraussetzung hierfür ist, wie in Fig. 3b gezeigt, dass die Erstreckung d der Spannpratze 8 unter die Werkstückauflageflächen 4, 5 bzw. unter die Auflageebene E des Werkstücks 2 kleiner ist als die Bürstenhöhe h. Durch Verschieben des zweiten Unterstützungsschlittens 13b bis unter die Spannpratze 8 kann der Bearbeitungsbereich 23 des Laserschneidkopfs 9 in Y-Richtung nach außen hin erweitert werden, so dass eine schneidende Bearbeitung auch in unmittelbarer Nähe zu den Spannpratzen 8 erfolgen kann, wie in Fig. 3a zu erkennen ist. Es versteht sich, dass die erste Bewegungseinrichtung 7 ggf. auch an der in Fig. 1 und Fig. 2 vorderen Seite der Werkstückauflagen 4, 5 eine oder mehrere Klemmeinrichtungen z.B. in Form von Spannpratzen aufweisen kann, unter die der zweite Teilbereich 22a des ersten Unterstützungsschlittens 13a zumindest teilweise verfahren werden kann.

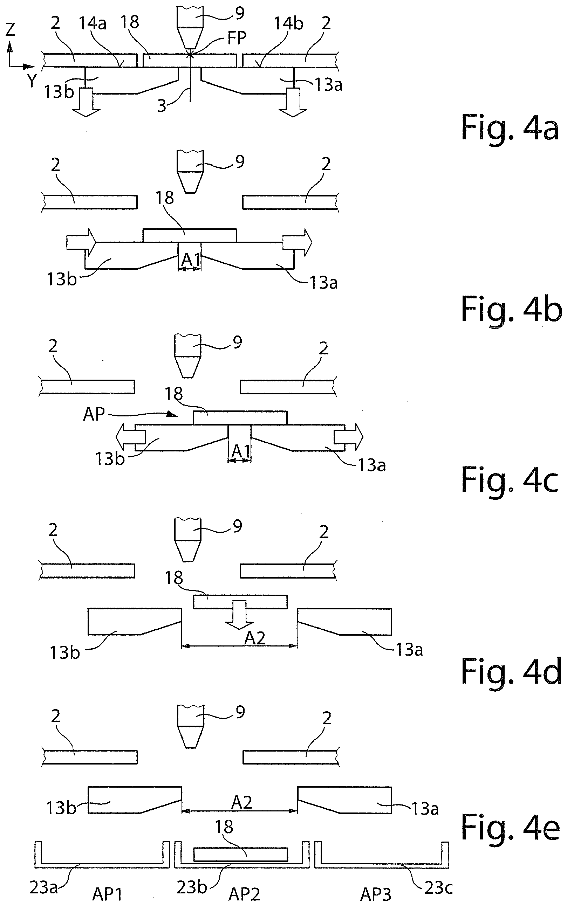

**Fig. 4a****-e** zeigen beispielhaft einen Bewegungsablauf zum Verbringen des freigeschnittenen Werkstückteils 18 von Fig. 2 an eine Ausschleusposition AP in Y-Richtung, die sich von der Freischneideposition FP (vgl. Fig. 2) unterscheidet. Wie in Fig. 4a zu erkennen ist, liegt das Werkstückteil 18 nach dem Freischneiden auf den beiden Unterstützungsschlitten 13a, 13b auf, die (anders als in Fig. 2 gezeigt ist) beim Freischneiden in einem Abstand A1 zueinander angeordnet sind, da die Unterstützungsschlitten 13a, 13b von Fig. 4a-e keine Aussparungen aufweisen, durch die der Laserstrahl 3 beim Freischneiden hindurchtreten kann.

Im gezeigten Beispiel sind die Unterstützungsschlitten 13a, 13b höhenverstellbar ausgebildet, d.h. diese können - wie in Fig. 4a durch Pfeile angedeutet ist - aus einer Stellung, in welcher die Auflageflächen 14a, 14b sich auf der Höhe der Werkstückauflageflächen 4, 5 befinden, in eine abgesenkte Stellung bewegt werden, welche in Fig. 4b dargestellt ist. In der abgesenkten Stellung können die beiden Unterstützungsschlitten 13a, 13b mitsamt des auf diesen aufliegenden Werkstückteils 18 innerhalb des Spalts 6 unter dem Werkstück 2 hindurch in Y-Richtung verschoben werden, wie in Fig. 4b durch Pfeile angedeutet ist. Die Bewegung der Unterstützungsschlitten 13a, 13b in Y-Richtung erfolgt synchronisiert, d.h. mit konstantem Abstand A1, bis eine in Fig. 4c gezeigte Ausschleusposition AP für das Werkstückteil 18 in Y-Richtung erreicht ist.

Um das Werkstückteil 18 an der Ausschleusposition AP in freiem Fall nach unten aus dem Spalt 6 zu entfernen, werden die beiden Unterstützungsschlitten 13a, 13b in Y-Richtung schnell gegenläufig bewegt, wodurch der Abstand in Y-Richtung vergrößert wird, bis ein Abstand A2 erreicht ist, der so groß ist, dass das Werkstückteil 18 zwischen den beiden Unterstützungsschlitten 13a, 13b nach unten fallen kann. Die gegenläufige Bewegung der beiden Unterstützungsschlitten 13a, 13b erfolgt typischer Weise synchronisiert, d.h. mit gleichem Betrag der Beschleunigung bzw. Geschwindigkeit, so dass das Werkstückteil 18 bei der Auseinanderbewegung der beiden Unterstützungsschlitten 13a, 13b an der Ausschleusposition AP verbleibt und nicht seitlich verschoben wird.

Wie in Fig. 4e dargestellt ist, bewegt sich das freigeschnittene Werkstückteil 18 an einer ausgewählten Ausschleusposition AP1, AP2 oder AP3 in freiem Fall nach unten und wird in einer Teilekiste 23b abgelegt. Es versteht sich, dass die Ausschleusposition AP des Werkstückteils 18 in Y-Richtung variabel ist und insbesondere unabhängig von der Freischneideposition FP gewählt werden kann. Das Werkstückteil 18 kann daher beispielsweise auch in einer der beiden anderen in Fig. 4e gezeigten Teilekisten 23a, 23c abgelegt werden. Durch die Variation der Ausschleusposition AP kann eine Sortierung von Werkstückteilen 18 erfolgen. Gegebenenfalls kann auch ein Werkstückteil 18 nach außen über den Spalt 6 hinaus bewegt und einem Maschinenbediener für eine manuelle Entnahme zugänglich gemacht werden. Es versteht sich, dass an Stelle von Teilekisten 23a-c auch andere Einrichtungen für die Aufnahme bzw. das Ausschleusen von freigeschnittenen Werkstückteilen 18 unter dem Spalt 6 positioniert werden können, beispielsweise Teilerutschen oder Förderbänder.

Anders als bei dem in Fig. 4a-e gezeigten Bewegungsablauf können die Absenkbewegung und das Auseinanderfahren der beiden Unterstützungsschlitten 13a, 13b überlagert erfolgen, um ein hochdynamisches Ausschleusen zu ermöglichen. Zusätzlich oder alternativ kann die Absenkbewegung der beiden Unterstützungsschlitten 13a, 13b asynchron erfolgen, so dass die Auflageflächen 14a, 14b beim Absenken eine jeweils unterschiedliche Position in Z-Richtung einnehmen und das freigeschnittene Werkstückteil 18 gekippt wird, so dass dieses nicht mehr vollflächig auf den Auflageflächen 14a, 14b aufliegt, wodurch die Haftreibung reduziert wird. Die Unterstützungsschlitten 13a, 13b können auch ohne vorherige Absenkbewegung auseinander gefahren werden, so dass kleine Werkstückteile, insbesondere Schrott-Teile bzw. Schneidbutzen in freiem Fall durch den Spalt 6 nach unten fallen und ausgeschleust werden können.

Die Höhenverstellbarkeit der Unterstützungsschlitten 13a, 13b kann auch genutzt werden, um ein verkantetes Werkstückteil 18 vom Restwerkstück 2 zu lösen, indem das verkantete Werkstückteil von dem bzw. den Unterstützungsschlitten 13a, 13b bis unter die Unterseite des Werkstücks 2 angehoben wird. Die Unterstützungsschlitten 13a, 13b können auch genutzt werden, um von unten gegen das Werkstück 2 zu klopfen und auf diese Weise ein verkantetes Werkstückteil 18 vom Restwerkstück 2 zu lösen.

Um eine Kollision der Unterstützungsschlitten 13a, 13b mit dem Werkstück 2 zu vermeiden, kann die Bewegung der Unterstützungsschlitten 13a, 13b in dem Spalt 6 in der in Fig. 4b gezeigten abgesenkten Stellung erfolgen. Insbesondere kann das Zusammenfahren der Unterstützungsschlitten 13a, 13b zum Unterstützen eines Werkstückteils 18 im Moment des Freischneidens erfolgen, indem die Bewegung der Unterstützungsschlitten 13a, 13 in Y-Richtung aufeinander zu mit dem Anheben der Unterstützungsschlitten 13a, 13b in Z-Richtung überlagert wird. Alternativ oder zusätzlich zur Höhenverstellbarkeit der Unterstützungsschlitten 13a, 13b selbst können die Auflageflächen 14a, 14b relativ zum restlichen Unterstützungsschlitten 13a, 13b bzw. zu einem Grundkörper der Unterstützungsschlitten 13a, 13b höhenverstellbar ausgebildet sein. Die Bewegung der Auflageflächen 14a, 14b erfolgt in diesem Fall auf die oben im Zusammenhang mit den höhenverstellbaren Unterstützungsschlitten 13a, 13b beschriebene Weise.

Die unabhängige Verfahrbarkeit der Unterstützungsschlitten 13a, 13b in Y-Richtung in dem Spalt 6 ermöglicht es, den Abstand der Position Y_{UA}, Y_{UB} des jeweiligen Unterstützungsschlittens 13a, 13b von der Schneidkopfposition Y_{S} in Abhängigkeit von der Größe und/oder der Dicke eines von dem Werkstück 2 freizuschneidenden Werkstückteils zu wählen. Dies ist günstig, da vergleichsweise große Werkstückteile, die beim Freischneiden von dem (Rest-)Werkstück 2 auf beiden Werkstückauflageflächen 4, 5 aufliegen, den Spalt 6 überbrücken und - sofern diese eine ausreichende Dicke und damit Biegesteifigkeit aufweisen - in der Regel nicht mit Hilfe der Unterstützungsschlitten 13a, 13b unterstützt werden müssen.

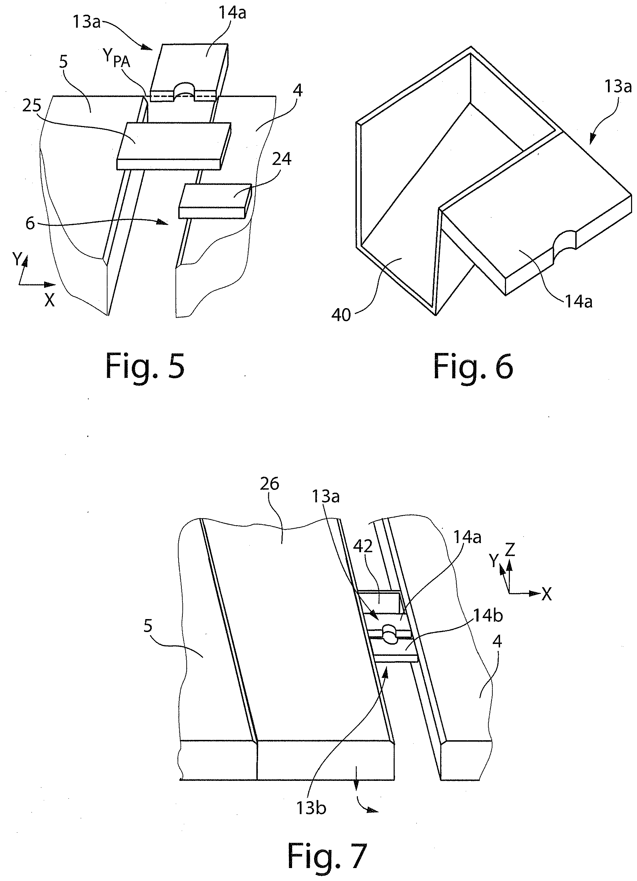

Ein solches nicht kippgefährdetes Werkstückteil 25, das biegesteif ist und dessen Breite größer ist als die Breite b des Spalts 6, ist in **Fig. 5** dargestellt. Auch bei einem weiteren in Fig. 5 dargestellten, ebenfalls vergleichsweise dicken und somit biegesteifen Werkstückteil 24, dessen Abmessungen geringer sind als die Breite b des Spalts 6, dessen Schwerpunkt aber im Moment des Freischnitts weit genug vom Rand des Spalts 6 entfernt liegt, ist die Gefahr des Kippens in den Spalt 6 aufgrund des aus einer Bearbeitungsdüse 9a des Laserschneidkopfs 9 auf das Werkstückteil 24 auftreffenden Schneidgases gering, so dass dieses nicht unterstützt werden muss.

Für die Bearbeitung der in Fig. 5 gezeigten Werkstückteile 24, 25 ist es günstig, die nicht zur Unterstützung benötigten Unterstützungsschlitten 13a, 13b in einem ausreichenden Abstand von der Schneidkopfposition Y_{S} anzuordnen, an der die Bearbeitung des Werkstücks 2 erfolgt, um eine Verschmutzung und/oder Beschädigung der Unterstützungsschlitten 13a, 13b durch den Laserstrahl 3 zu vermeiden. Insbesondere kann in diesem Fall der erste Unterstützungsschlitten 13a an einer in Fig. 5 gezeigten Parkposition Y_{PA} angeordnet werden, die außerhalb des Spalts 6 und somit außerhalb des Verfahrbereichs des Schneidkopfs 9 liegt. Auch der zweite Unterstützungsschlitten 13b kann wie in Fig. 3a gezeigt in eine teilweise unter die Spannpratze 8 zurückgezogene Stellung verfahren werden, die außerhalb des Bewegungsbereichs 23 des Laserschneidkopfs 9 liegt.

Alternativ zu den weiter oben im Zusammenhang mit Fig. 4a-e gezeigten Ausschleusvorgang kann ein Ausschleusen von kleinen Werkstückteilen 18 auch über eine Teilerutsche 40 erfolgen, die benachbart zur Auflagefläche 14a an einer der Ausnehmung 20a gegenüber liegenden Außenkante der Auflagefläche 14a eines Unterstützungsschlittens 13a angebracht ist, wie in **Fig. 6** dargestellt ist.

Über die Teilerutsche 40 ausschleusbare Werkstückteile 18 weisen Abmessungen auf, die kleiner sind als die Breite b des Spalts 6. Um solche freigeschnittene Werkstückteile auf die Rutsche 40 zu befördern, kann der Unterstützungsschlitten 13a dynamisch, d.h. mit hoher Beschleunigung, in Y-Richtung verfahren werden, so dass eine Relativbewegung zwischen dem freigeschnittenen Werkstückteil und dem Unterstützungsschlitten 13a erfolgt. Da das Werkstückteil aufgrund seiner Trägheit der schnellen Bewegung des Unterstützungsschlittens 13a nicht folgen kann, wird der Unterstützungsschlitten 13a relativ zum Werkstückteil seitlich verschoben, so dass das Werkstückteil idealer Weise im freien Fall auf die Rutsche 40 trifft. Das Ausschleusen von Werkstückteilen kann auch durch eine dynamische Bewegung des Unterstützungsschlittens 13a ohne die Verwendung einer Teilerutsche 40 erfolgen. Der Unterstützungsschlitten 13a wird hierbei so schnell verfahren, dass das aufliegende Werkstückteil aufgrund seiner Trägheit der seitlichen Bewegung des Unterstützungsschlittens 13a nicht folgen kann, so dass das Werkstückteil seine flächige Unterstützung verliert und idealer Weise im freien Fall durch den Spalt 6 nach unten ausgeschleust wird.

Zusätzlich oder alternativ zur Möglichkeit der Absenkung in Schwerkraftrichtung Z können einer oder beide der Unterstützungsschlitten 13a, 13b auch nach unten schwenkbar an den Werkstückauflageflächen 4, 5 gelagert sein, um freigeschnittene Werkstückteile 18 durch den Spalt 6 aus der Laserbearbeitungsmaschine 1 auszuschleusen. Die Schwenkbewegung der Unterstützungsschlitten 13a, 13b ist insbesondere günstig, wenn mindestens eine sich in Y-Richtung erstreckende Ausschleusklappe 26 zwischen einer der Werkstückauflageflächen 4 und dem sich in Y-Richtung erstreckenden Spalt 6 angeordnet ist, wie dies in **Fig. 7** dargestellt ist, da in diesem Fall eine gemeinsame Absenk- und Schwenkbewegung der Unterstützungsschlitten 13a, 13b und der Ausschleusklappe 26 realisiert werden kann.

Wie in Fig. 7 durch einen Pfeil angedeutet ist, lässt sich die Ausschleusklappe 25 bei einer solchen Bewegung zunächst absenken, um ein Verhaken von freigeschnittenen Werkstückteilen 18 mit dem Restwerkstück 2 zu verhindern. An die vergleichsweise langsame Absenkbewegung schließt sich eine schnellere Kipp- bzw. Schwenkbewegung an, mittels derer zumindest teilweise auf der Ausschleusklappe 26 aufliegende Werkstückteile nach unten durch den Spalt 6 aus dem Bearbeitungsbereich entfernt werden können.

Werden die Unterstützungsschlitten 13a, 13b mit der Ausschleusklappe 26 mechanisch gekoppelt, kann ein gemeinsames Absenken und Schwenken der Unterstützungsschlitten 13a, 13b und der Ausschleusklappe 26 erfolgen. Generell sind für die gesteuerte Bewegung der Unterstützungsschlitten 13a, 13b in Y-Richtung jeweils eine Führung sowie ein Antrieb erforderlich. Der Antrieb eines jeweiligen Unterstützungsschlittens 13a, 13b kann durch einen Kugelgewindetrieb gebildet sein, dessen Spindel und Antriebsmotor an einem Gestänge der Ausschleusklappe angebracht sind. Die Gewindemutter kann am Unterstützungsschlitten 13a, 13b angebracht sein und ein Führungselement umfassen, welches in einem als Linearführung ausgebildeten Teilbereich des Gestänges verschiebbar geführt ist. Die gemeinsame Absenkbewegung der Unterstützungsschlitten 13a, 13b und der Ausschleusklappe 26 kann in diesem Fall durch ein Absenken des Gestänges 30 erreicht werden.

Die Schwenkbewegung kann durch eine Drehung um eine Drehachse realisiert werden, die im Wesentlichen mit der Position der Achse des Kugelgewindetriebs zusammenfällt, die bei dem in Fig. 7 gezeigten Beispiel an der dem Spalt 6 zugewandten Außenseite der ersten Werkstückauflage 4 gebildet ist und die in Y-Richtung verläuft. Es versteht sich, dass die Drehung alternativ um eine in Y-Richtung verlaufende Drehachse erfolgen kann, die an einer dem Spalt 6 zugewandten Außenseite der zweiten Werkstückauflage 5 benachbart zur Ausschleusklappe 26 gebildet ist.

Durch die gemeinsame Schwenkbewegung können Werkstückteile, die sowohl auf der Ausschleusklappe 26 als auch auf einer oder beiden Auflageflächen 14a, 14b der Unterstützungsschlitten 13a, 13b aufliegen, prozesssicher durch den Spalt 6 ausgeschleust werden. Es versteht sich, dass eine Schwenk- und/oder Absenkbewegung der Unterstützungsschlitten 13a, 13b auch ohne eine mechanische Anbindung an eine Ausschleusklappe realisiert werden kann. In diesem Fall kann die Ausschleusklappe 26 unabhängig von den Unterstützungsschlitten 13a, 13b verschwenkt werden. Alternativ zu einer Ausschleusklappe, die sich wie in Fig. 7 gezeigt in Y-Richtung über die gesamte Länge des Spalts 6 erstreckt, kann auch eine in Y-Richtung segmentierte Ausschleusklappe bzw. zwei oder mehr Ausschleusklappen verwendet werden. Wie in Fig. 7 zu erkennen ist, ist beim Vorhandensein der Ausschleusklappe 26 die Breite b des Spalts 6 typischer Weise geringer als bei dem in Fig. 1 und Fig. 2 gezeigten Beispiel, da das Ausschleusen von größeren Werkstückteilen durch Verschwenken der Ausschleusklappe 26 erfolgen kann. Gegebenenfalls können für das Ausschleusen von Werkstückteilen auch die Auflageflächen 14a, 14b relativ zum restlichen Unterstützungsschlitten 13a, 13b um eine sich in der X-Richtung oder der Y-Richtung erstreckende Schwenkachse verschwenkt werden.

Eine weitere Möglichkeit zum Ausschleusen von kleinen Werkstückteilen stellt die seitliche Anbringung eines Kleinteilebehälters 42 an einem der Unterstützungsschlitten 13a dar, wie beispielhaft in Fig. 7 gezeigt ist. Im Gegensatz zur in Fig. 6 gezeigten Teilerutsche 40 dient der Kleinteilebehälter 42 zur Aufnahme und Lagerung von kleinen Werkstückteilen. Die in dem Kleinteilebehälter 42 gelagerten Teile können z.B. in der Parkposition Yp (vgl. Fig. 5) des ersten Unterstützungsschlittens 13a automatisiert oder manuell entnommen werden.

Neben den weiter oben beschriebenen Möglichkeiten zum Ausschleusen von Werkstückteilen ist es ebenfalls möglich, freigeschnittene Werkstückteile nach oben auszuschleusen, beispielsweise durch die Verwendung von Saug- oder Magnetgreifern. Falls die Werkstückauflageflächen 4, 5 anders als in Fig. 1 und Fig. 2 gezeigt, in der Art eines Förderbandes ausgebildet sind, können freigeschnittene Werkstückteile auch durch eine Bewegung eines solchen Förderbandes in X-Richtung ausgeschleust werden.

Zusammenfassend kann auf die oben beschriebene Weise während der schneidenden Bearbeitung, insbesondere beim Freischneiden, eine verbesserte, flächige Unterstützung von Werkstückteilen erfolgen. Auch kann mit Hilfe der Unterstützungsschlitten 13a, 13b ein vereinfachtes Ausschleusen von freigeschnittenen Werkstückteilen realisiert werden.

## Patentansprüche

1. Maschine (1) zum trennenden Bearbeiten eines plattenförmigen Werkstücks (2) mittels eines Bearbeitungsstrahls (3), mit:
einer ersten Bewegungseinrichtung (7) zur Bewegung des Werkstücks (2) in einer ersten Richtung (X),
einer zweiten Bewegungseinrichtung (11) zur Bewegung eines den Bearbeitungsstrahl (3) auf das Werkstück (2) ausrichtenden Bearbeitungskopfs (9) in einer zweiten, zur ersten senkrechten Richtung (Y), sowie zwei Werkstückauflageflächen (4, 5) zur Auflage des Werkstücks (2), zwischen denen ein sich entlang der zweiten Richtung (Y) erstreckender Spalt (6) gebildet ist,
**dadurch gekennzeichnet,**
**dass** innerhalb des Spalts (6) mindestens zwei in der zweiten Richtung (Y) unabhängig voneinander verfahrbare Unterstützungsschlitten (13a, 13b) angeordnet sind, die jeweils eine Auflagefläche (14a, 14b) zur Unterstützung des auf den Werkstückauflageflächen (4, 5) aufliegenden Werkstücks (2) und zur Unterstützung von beim trennenden Bearbeiten geschnittenen Werkstückteilen (18) aufweisen.

2. Maschine nach Anspruch 1, die eine zusätzliche Bewegungseinrichtung (12) zur Bewegung des Bearbeitungskopfs (9) in der ersten Richtung (X) innerhalb des Spalts (6) aufweist.

3. Maschine nach Anspruch 1 oder 2, bei welcher die Unterstützungsschlitten (13a, 13b) unabhängig vom Bearbeitungskopf (9) in der zweiten Richtung (Y) verfahrbar sind.

4. Maschine nach einem der vorhergehenden Ansprüche, bei welcher ein erster Unterstützungsschlitten (13a) an einer einem zweiten Unterstützungsschlitten (13b) zugewandten Außenkante (19a) seiner Auflagefläche (14a) eine Aussparung (20a) aufweist.

5. Maschine nach Anspruch 4, bei welcher der zweite Unterstützungsschlitten (13b) an einer dem ersten Unterstützungsschlitten (13a) zugewandten Außenkante (19b) seiner Auflagefläche (14b) eine Aussparung (20b) aufweist, die an derselben Stelle in der ersten Richtung (X) positioniert ist wie die Aussparung (20a) an dem ersten Unterstützungsschlitten (13a).

6. Maschine nach einem der vorhergehenden Ansprüche, bei welcher die Auflagefläche (14a, 14b) mindestens eines Unterstützungsschlittens (13a, 13b) einen Teilbereich (21a, 21b) aus einem hitzeunempfindlichen und funkenundurchlässigen Material aufweist.

7. Maschine nach Anspruch 6, bei welcher die Auflagefläche (14a, 14b) des mindestens einen Unterstützungsschlittens (13a, 13b) einen weiteren Teilbereich (22a, 22b) aufweist, der als Bürstenauflage ausgebildet ist.

8. Maschine nach Anspruch 7, bei welcher eine Bürstenhöhe (h) des als Bürstenauflage ausgebildeten Teilbereichs (22a, 22b) der Auflagefläche (14a, 14b) größer ist als eine Erstreckung (d) einer zum Klemmen des Werkstücks (2) bei dessen Bewegung in der ersten Richtung (X) vorgesehenen Klemmeinrichtung (8) unter die Werkstückauflageflächen (4, 5).

9. Maschine nach einem der vorhergehenden Ansprüche, bei welcher mindestens einer der Unterstützungsschlitten (13a, 13b) in eine Parkposition (Y_{PA}) außerhalb eines Verfahrbereichs des Bearbeitungskopfs (9) in der zweiten Richtung (Y) verfahrbar ist.

10. Maschine nach einem der vorhergehenden Ansprüche, bei der die Auflagefläche (14a, 14b) mindestens eines Unterstützungsschlittens (13a, 13b) und/oder mindestens einer der Unterstützungsschlitten (13a, 13b) selbst in Schwerkraftrichtung (Z) verfahrbar ist.

11. Maschine nach einem der vorhergehenden Ansprüche, bei der die Auflagefläche (14a, 14b) mindestens eines Unterstützungsschlittens (13a, 13a) und/oder mindestens einer der Unterstützungsschlitten (13a, 13b) selbst nach unten schwenkbar ist.

12. Maschine nach einem der vorhergehenden Ansprüche, bei welcher mindestens einer der Unterstützungsschlitten (13a, 13b) entlang einer benachbart zum Spalt (6) angeordneten Ausschleusklappe (26) verfahrbar und gemeinsam mit der Ausschleusklappe (26) nach unten schwenkbar ist.

13. Maschine nach einem der vorhergehenden Ansprüche, bei der an mindestens einem der Unterstützungsschlitten (13a, 13b) ein Kleinteilebehälter (42) und/oder eine Teilerutsche (40) angebracht ist.

14. Maschine nach einem der vorhergehenden Ansprüche, bei der mindestens einer der Unterstützungsschlitten (13a, 13b) mit einem Überdeckungselement (16a, 16b) zur Überdeckung des Spalts (6) verbunden ist.

15. Maschine nach einem der vorhergehenden Ansprüche, weiter umfassend: eine Steuerungseinrichtung (15), die ausgebildet ist, mindestens einen, insbesondere zwei, der Unterstützungsschlitten (13a, 13b) unter einem beim trennenden Bearbeiten freizuschneidenden Werkstückteil (18) zu positionieren.

16. Maschine nach Anspruch 15, bei welcher die Steuerungseinrichtung (15) ausgebildet ist, die Bewegung des Werkstücks (2), der Unterstützungsschlitten (13a, 13b) und des Bearbeitungskopfs (9) so zu steuern, dass das Freischneiden des Werkstückteils (18) an einer Freischneideposition (FP) derart erfolgt, dass das Werkstückteil (18) beim Freischnitt durch die Auflageflächen (14a, 14b) der beiden Unterstützungsschlitten (13a, 13b) unterstützt wird, wobei die Freischneideposition (FP) insbesondere zwischen zwei einander gegenüber liegenden Aussparungen (20a. 20b) in den Auflageflächen (14a, 14b) der Unterstützungsschlitten (13a, 13b) gebildet ist.

17. Verfahren zum trennenden Bearbeiten eines Werkstücks (2) an einer Maschine (1) nach einem der vorhergehenden Ansprüche, umfassend:
Positionieren von mindestens einem der Unterstützungsschlitten (13a, 13b) unter einem beim trennenden Bearbeiten freizuschneidenden Werkstückteil (18).

18. Verfahren nach Anspruch 17, weiter umfassend:
Freischneiden des Werkstückteils (18) an einer Freischneideposition (FP), die derart gewählt ist, dass das Werkstückteil (18) beim Freischnitt durch die Auflageflächen (14a, 14b) der beiden Unterstützungsschlitten (13a, 13b) unterstützt wird.

19. Verfahren nach Anspruch 18, bei dem die Freischneideposition (FP) zwischen zwei einander gegenüber liegenden Aussparungen (20a, 20b) an den Auflageflächen (14a, 14b) der Unterstützungsschlitten (13a, 13b) angeordnet ist.

20. Verfahren nach einem der Ansprüche 17 bis 19, bei dem vordem Freischneiden eines Werkstückteils (18) die beiden Unterstützungsschlitten (13a, 13b) in dem Spalt (6) aufeinander zu bewegt werden, bis die beiden Unterstützungsschlitten (13a, 13b) zueinander benachbart in dem Spalt (6) angeordnet sind.

21. Verfahren nach Anspruch 20, bei dem die Auflageflächen (14a, 14b) der Unterstützungsschlitten (13a, 13b) und/oder die Unterstützungsschlitten (13a, 13b) selbst während der Bewegung unter die Werkstück-Auflageebene (E) abgesenkt sind.

22. Verfahren nach einem der Ansprüche 17 bis 21, weiter umfassend: Ausschleusen des freigeschnittenen Werkstückteils (18) durch Vergrößern eines Abstands (A1, A2) zwischen den beiden Unterstützungsschlitten (13a, 13b) in der zweiten Richtung (Y).

23. Verfahren nach einem der Ansprüche 17 bis 22, weiter umfassend: Ausschleusen des freigeschnittenen Werkstückteils (18) durch Schwenken der Auflagefläche (14a, 14b) mindestens eines Unterstützungsschlittens (13a, 13b) und/oder durch Schwenken des mindestens einen Unterstützungsschlittens (13a, 13b) selbst nach unten.

24. Verfahren nach einem der Ansprüche 17 bis 23, bei dem die Auflageflächen (14a, 14b) der Unterstützungsschlitten (13a, 13b) und/oder die Unterstützungsschlitten (13a, 13b) selbst vor dem Ausschleusen oder während des Ausschleusens des freigeschnittenen Werkstückteils (18) abgesenkt werden.

25. Verfahren nach Anspruch 24, bei dem die Unterstützungsschlitten (13a, 13b) mit dem auf den Auflageflächen (14a, 14b) aufliegenden freigeschnittenen Werkstückteil (18) in einer bevorzugt synchronen Bewegung an eine Ausschleusposition (AP, AP1, AP2, AP3) innerhalb des Spalts (6) verfahren werden.

## Claims

1. A machine (1) for the separative machining of a plate-shaped workpiece (2) by means of a processing beam (3), said machine (1) having:
a first movement unit (7) for moving the workpiece (2) in a first direction (X);
a second movement unit (11) for moving a machining head (9), which aligns the processing beam (3) onto the workpiece (2), in a second direction (Y) which is perpendicular to the first direction; and
two workpiece-bearing faces (4, 5) for bearing the workpiece (2), a gap (6) which extends along the second direction (Y) being formed between the former,
**characterized in**
**that** at least two support slides (13a, 13b), which are displaceable in the second direction (Y) in a mutually independent manner and which each have a bearing face (14a, 14b) for supporting the workpiece (2) borne on the workpiece-bearing faces (4, 5) and for supporting workpiece parts (18) which are cut in the course of separative machining, are disposed within the gap (6).

2. The machine as claimed in claim 1, wherein the machine has an additional movement unit (12) for moving the machining head (9) in the first direction (X) within the gap (6).

3. The machine as claimed in claim 1 or 2, wherein the support slides (13a, 13b) are displaceable in the second direction (Y) independently of the machining head (9).

4. The machine as claimed in one of the preceding claims, wherein a first support slide (13a) on an external edge (19a) of the bearing face (14a) that faces a second support slide (13b) has a recess (20a)

5. The machine as claimed in claim 4, wherein the second support slide (13b) on an external edge (19b) of the bearing face (14b) that faces the first support slide (13a) has a recess (20b) which is positioned at the same location in the first direction (X) as the recess (20a) on the first support slide (13a).

6. The machine as claimed in one of the preceding claims, wherein the bearing face (14a, 14b) of at least one support slide (13a, 13b) has a part-region (21a, 21b) of a heat-resistant and spark-impermeable material.

7. The machine as claimed in claim 6, wherein the bearing face (14a, 14b) of the at least one support slide (13a, 13b) has a further part-region (22a, 22b) which is configured as a brush bearing.

8. The machine as claimed in claim 7, wherein a brush height (h) of that part-region (22a, 22b) of the bearing face (14a, 14b) that is configured as a brush bearing is larger than an extent (d) below the workpiece-bearing faces (4, 5) of a clamping installation (8) which is provided for clamping the workpiece (2) upon movement of the latter in the first direction (X).

9. The machine as claimed in one of the preceding claims, wherein at least one of the support slides (13a, 13b) is displaceable to a parking position (Y_{PA}) outside a displacement range of the machining head (9) in the second direction (Y).

10. The machine as claimed in one of the preceding claims, wherein the bearing face (14a, 14b) of at least one support slide (13a, 13b) and/or at least one of the support slides (13a, 13b) *per se* are/is displaceable in the direction of gravity (Z).

11. The machine as claimed in one of the preceding claims, wherein the bearing face (14a, 14b) of at least one support slide (13a, 13b) and/or at least one of the support slides (13a, 13b) *per se* are/is downwardly pivotable.

12. The machine as claimed in one of the preceding claims, wherein at least one of the support slides (13a, 13b) is displaceable along a discharge flap (26) which is disposed so as to be adjacent to the gap (6), and is downwardly pivotable conjointly with the discharge flap (26).

13. The machine as claimed in one of the preceding claims, wherein a small-parts container (42) and/or a parts chute (40) are/is attached to at least one of the support slides (13a, 13b).

14. The machine as claimed in one of the preceding claims, wherein at least one of the support slides (13a, 13b) is connected to a covering element (16a, 16b) for covering the gap (6).

15. The machine as claimed in one of the preceding claims, the machine furthermore comprising: a controller unit (15) which is configured for positioning at least one, in particular two, of the support slides (13a, 13b) below a workpiece part (18) which is to be cut off in the separative machining.

16. The machine as claimed in claim 15, wherein the controller unit (15) is configured for controlling the movement of the workpiece (2), of the support slides (13a, 13b), and of the machining head (9) such that cutting off of the workpiece part (18) at a separating cut position (FP) is performed in such a manner that the workpiece part (18) during the separating cut process is supported by the bearing faces (14a, 14b) of the two support slides (13a, 13b), the separating cut position (FP) being formed in particular between two mutually opposed recesses (20a, 20b) in the bearing faces (14a, 14b) of the support slides (13a, 13b).

17. A method for the separative machining of a workpiece (2) in a machine (1) as claimed in one of the preceding claims, the method comprising:
positioning at least one of the support slides (13a, 13b) below a workpiece part (18) to be cut off in the course of separative machining.

18. The method as claimed in claim 17, the method further comprising: cutting off of the workpiece part (18) at a separating cut position (FP) which is chosen in such a manner that the workpiece part (18) during the separating cut process is supported by the bearing faces (14a, 14b) of the two support slides (13a, 13b).

19. The method as claimed in claim 18, wherein the separating cut position (FP) is disposed between two mutually opposite recesses (20a, 20b) on the bearing faces (14a, 14b) of the support slides (13a, 13b).

20. The method as claimed in one of claims 17 to 19, wherein prior to cutting off a workpiece part (18), the two support slides (13a, 13b) in the gap (6) are converged until the two support slides (13a, 13b) are disposed so as to be mutually adjacent in the gap (6).

21. The method as claimed in claim 20, wherein the bearing faces (14a, 14b) of the support slides (13a, 13b) and/or the support slides (13a, 13b) *per se* when moving are lowered below the workpiece bearing plane (E).

22. The method as claimed in one of claims 17 to 21, the method further comprising: discharging the cut off workpiece part (18) by enlarging a spacing (A1, A2) between the two support slides (13a, 13b) in the second direction (Y).

23. The method as claimed in one of claims 17 to 22, the method further comprising: discharging the cut off workpiece part (18) by pivoting the bearing face (14a, 14b) of at least one support slide (13a, 13b) and/or by downwardly pivoting the at least one support slide (13a, 13b) *per se.*

24. The method as claimed in one of claims 17 to 23, wherein the bearing faces (14a, 14b) of the support slides (13a, 13b) and/or the support slides (13a, 13b) *per se* are lowered prior to discharging or during discharging of the cut off workpiece part (18).

25. The method as claimed in claim 24, wherein the support slides (13a, 13b) in a preferably synchronous movement are displaced to a discharging position (AP, AP1, AP2, AP3) within the gap (6) with the cut off workpiece part (18) bearing on the bearing faces (14a, 14b).

## Revendications

1. Machine (1) pour l'usinage de séparation d'une pièce (2) en forme de plaque au moyen d'un faisceau d'usinage (3), avec :
un premier dispositif de déplacement (7) pour déplacer la pièce (2) dans une première direction (X),
un deuxième dispositif de déplacement (11) pour déplacer, dans une deuxième direction (Y) perpendiculaire à la première, une tête d'usinage (9) orientant le faisceau d'usinage (3) vers la pièce (2), ainsi que
deux surfaces d'appui de pièce (4, 5) pour l'appui de la pièce (2), entre lesquelles est formé un interstice (6) s'étendant le long de la deuxième direction (Y),
**caractérisée en ce qu'**au moins deux chariots de soutien (13a, 13b), pouvant être déplacés indépendamment l'un de l'autre dans la deuxième direction (Y), sont disposés à l'intérieur de l'interstice (6), chariots qui présentent chacun une surface d'appui (14a, 14b) pour le soutien de la pièce (2) reposant sur les surfaces d'appui de pièce (4, 5) et pour le soutien de parties de pièce (18) coupées lors de l'usinage de séparation.

2. Machine selon la revendication 1, qui présente un dispositif de déplacement supplémentaire (12) pour le déplacement de la tête d'usinage (9) dans la première direction (X) à l'intérieur de l'interstice (6).

3. Machine selon la revendication 1 ou 2, dans laquelle les chariots de soutien (13a, 13b) peuvent être déplacés indépendamment de la tête d'usinage (9) dans la deuxième direction (Y).

4. Machine selon l'une des revendications précédentes, dans laquelle un premier chariot de soutien (13a) présente un évidement (20a) sur un bord extérieur (19a) de sa surface d'appui (14a) qui est tourné vers un deuxième chariot de soutien (13b).

5. Machine selon la revendication 4, dans laquelle le deuxième chariot de soutien (13b) présente, sur un bord extérieur (19b) de sa surface d'appui (14b) qui est tourné vers le premier chariot de soutien (13a), un évidement (20b) qui est positionné au même endroit dans la première direction (X) que l'évidement (20a) sur le premier chariot de soutien (13a).

6. Machine selon l'une des revendications précédentes, dans laquelle la surface d'appui (14a, 14b) d'au moins un chariot de soutien (13a, 13b) présente une région partielle (21a, 21b) en un matériau résistant à la chaleur et imperméable aux étincelles.

7. Machine selon la revendication 6, dans laquelle la surface d'appui (14a, 14b) du chariot de soutien au moins unique (13a, 13b) présente une autre région partielle (22a, 22b) qui est réalisée sous forme de support de brosse.

8. Machine selon la revendication 7, dans laquelle une hauteur de brosse (h) de la région partielle (22a, 22b) de la surface d'appui (14a, 14b) réalisée sous forme de support de brosse est plus grande qu'une étendue (d) en dessous des surfaces d'appui de pièce (4, 5) d'un dispositif de serrage (8) prévu pour serrer la pièce (2) lors de son déplacement dans la première direction (X).

9. Machine selon l'une des revendications précédentes, dans laquelle au moins un des chariots de soutien (13a, 13b) peut être déplacé dans une position de repos (Y_{PA}) en dehors d'une plage de déplacement de la tête d'usinage (9) dans la deuxième direction (Y).

10. Machine selon l'une des revendications précédentes, dans laquelle la surface d'appui (14a, 14b) d'au moins un chariot de soutien (13a, 13b) et/ou au moins un des chariots de soutien (13a, 13b) lui-même peut être déplacé dans la direction de la gravité (Z).

11. Machine selon l'une des revendications précédentes, dans laquelle la surface d'appui (14a, 14b) d'au moins un chariot de soutien (13a, 13b) et/ou au moins un des chariots de soutien (13a, 13b) lui-même peut être pivoté vers le bas.

12. Machine selon l'une des revendications précédentes, dans laquelle au moins un des chariots de soutien (13a, 13b) peut être déplacé le long d'un volet d'évacuation (26) disposé au voisinage de l'interstice (6), et pivoté vers le bas conjointement avec le volet d'évacuation (26).

13. Machine selon l'une des revendications précédentes, dans laquelle un récipient de petites pièces (42) et/ou une glissière pour pièces (40) est installé sur au moins un des chariots de soutien (13a, 13b).

14. Machine selon l'une des revendications précédentes, dans laquelle au moins un des chariots de soutien (13a, 13b) est relié à un élément de recouvrement (16a, 16b) destiné à recouvrir l'interstice (6).

15. Machine selon l'une des revendications précédentes, comprenant en outre : un dispositif de commande (15), qui est conçu pour positionner au moins un et en particulier deux des chariots de soutien (13a, 13b) sous une partie de pièce (18) à dégager par découpage lors de l'usinage de séparation.

16. Machine selon la revendication 15, dans laquelle le dispositif de commande (15) est conçu pour commander le déplacement de la pièce (2), des chariots de soutien (13a, 13b) et de la tête d'usinage (9) de telle sorte que le dégagement par découpage de la partie de pièce (18) à une position (FP) de dégagement par découpage s'effectue de telle sorte que la partie de pièce (18) est soutenue lors de la coupe de dégagement par les surfaces d'appui (14a, 14b) des deux chariots de soutien (13a, 13b), sachant que la position (FP) de dégagement par découpage est notamment formée entre deux évidements en vis-à-vis (20a, 20b) dans les surfaces d'appui (14a, 14b) des chariots de soutien (13a, 13b).

17. Procédé pour l'usinage de séparation d'une pièce (2) sur une machine (1) selon l'une des revendications précédentes, comprenant :
positionnement d'au moins un des chariots de soutien (13a, 13b) en dessous d'une partie de pièce (18) à dégager par découpage lors de l'usinage de séparation.

18. Procédé selon la revendication 17, comprenant en outre :
dégagement par découpage de la partie de pièce (18) à une position (FP) de dégagement par découpage qui est choisie de telle sorte que la partie de pièce (18) est soutenue lors de la coupe de dégagement par les surfaces d'appui (14a, 14b) des deux chariots de soutien (13a, 13b).

19. Procédé selon la revendication 18, selon lequel la position (FP) de dégagement par découpage est disposée entre deux évidements en vis-à-vis (20a, 20b) sur les surfaces d'appui (14a, 14b) des chariots de soutien (13a, 13b).

20. Procédé selon l'une des revendications 17 à 19, selon lequel, avant le dégagement par découpage d'une partie de pièce (18), les deux chariots de soutien (13a, 13b) sont déplacés l'un vers l'autre dans l'interstice (6) jusqu'à ce que les deux chariots de soutien (13a, 13b) soient disposés en voisinage mutuel dans l'interstice (6).

21. Procédé selon la revendication 20, selon lequel les surfaces d'appui (14a, 14b) des chariots de soutien (13a, 13b) et/ou les chariots de soutien (13a, 13b) eux-mêmes sont abaissés en dessous du plan d'appui (E) de la pièce pendant le déplacement.

22. Procédé selon l'une des revendications 17 à 21, comprenant en outre :
évacuation de la partie de pièce (18) dégagée par découpage par agrandissement d'une distance (A1, A2) entre les deux chariots de soutien (13a, 13b) dans la deuxième direction (Y).

23. Procédé selon l'une des revendications 17 à 22, comprenant en outre :
évacuation de la partie de pièce (18) dégagée par découpage par pivotement de la surface d'appui (14a, 14b) d'au moins un chariot de soutien (13a, 13b) et/ou par pivotement du chariot de soutien au moins unique (13a, 13b) lui-même vers le bas.

24. Procédé selon l'une des revendications 17 à 23, selon lequel les surfaces d'appui (14a, 14b) des chariots de soutien (13a, 13b) et/ou les chariots de soutien (13a, 13b) eux-mêmes sont abaissés avant l'évacuation ou pendant l'évacuation de la partie de pièce (18) dégagée par découpage.

25. Procédé selon la revendication 24, selon lequel les chariots de soutien (13a, 13b) avec la partie de pièce (18) dégagée par découpage reposant sur les surfaces d'appui (14a, 14b) sont déplacés en un mouvement de préférence synchrone à une position d'évacuation (AP, AP1, AP2, AP3) à l'intérieur de l'interstice (6).
